# EUROPEAN PATENT APPLICATION

(11) **EP 4 760 883 A1**
(43) Date of publication of application: **17.06.2026**
(21) Application number: 25857246.0
(22) Date of filing: 04.08.2025
(51) Int. Cl.: H01M 10/6568, H01M 10/613, H01M 10/04, H01M 4/04

(54) **COOLING MANIFOLD FOR BATTERY CELL FORMATION PROCESS, AND BATTERY CELL PRESSING AND COOLING APPARATUS COMPRISING SAME**

(30) Priority: 19.08.2024 KR 20240110352
(71) Applicant: LG Energy Solution, Ltd., Seoul 07335 (KR)
(72) Inventor: JEON, Sang Chul, Daejeon 34122 (KR); PARK, Sung Min, Daejeon 34122 (KR); KANG, Tae Yeop, Daejeon 34122 (KR)
(74) Representative: Goddar, Heinz J.
(86) International application number: PCT/KR2025/011628
(87) International publication number: WO 2026/043157

(57) **Abstract**

Disclosed are a cooling manifold for battery cell formation processes capable of uniformly supplying a coolant for battery cell cooling to a pressing plate of a battery cell pressing and cooling system capable of reducing the process time required when cooling and pressing a pouch battery cell during an activation process of the pouch battery cell and measuring the voltage of the battery cell at the same time, thereby dramatically shortening the process time, and a battery cell pressing and cooling apparatus including the same.

## Description

### [Technical Field]

This application claims the benefit of priority to Korean Patent Application No. 2024-0110352 filed on August 19, 2024, the disclosure of which is incorporated herein by reference in its entirety.

The present invention relates to a cooling manifold for battery cell formation processes, and more particularly to a cooling manifold for battery cell formation processes capable of uniformly supplying a coolant for battery cell cooling to a pressing plate of a battery cell pressing and cooling system capable of reducing the process time required when cooling and pressing a pouch battery cell during an activation process of the pouch battery cell and measuring the voltage of the battery cell at the same time, thereby dramatically shortening the process time, and a battery cell pressing and cooling apparatus including the same.

### [Background Art]

With recent development of alternative energies due to air pollution and energy depletion caused as the result of use of fossil fuels, demand for secondary batteries capable of storing electrical energy that is produced has increased.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Recently, a pouch-shaped battery having a structure in which a stacked type electrode assembly or a stacked and folded type electrode assembly is mounted in a pouch-shaped battery case has been increasingly used for reasons of low manufacturing cost, light weight, easy deformation, etc.

Meanwhile, in a pouch battery cell manufacturing process, an electrode assembly is received in a pouch case, an electrolyte is injected into the pouch case, and an edge of the pouch case is heated and pressed to form a sealed portion. At this time, an electrode lead having one side connected to an electrode tab of the electrode assembly and the other side protruding outwardly of the pouch case may be located in the sealed portion, and an insulating film may be located between the sealed portion and the electrode lead.

Such a pouch-shaped battery cell undergoes an activation process after the electrolyte is injected into the pouch-shaped case having the electrode assembly received therein. The activation process is crucial in imparting electrical characteristics to the battery cell and forming an electrode SEI layer. During the activation process, gas is generated in the battery cell due to charging and discharging of the battery cell, whereby a swelling phenomenon in which the battery cell swells occurs, and in the part where the gas is generated, the solid electrolyte interphase (SEI) layer may be unevenly formed.

Therefore, during the activation process, in order to prevent gas trapping in the battery cell, to uniformly form the SEI layer, and to improve electrolyte impregnation by pressing the battery cell swollen by swelling due to charging and discharging or cooling the heated battery cell, the operations of pressing both side surfaces of the pouch of the battery cell and supplying a coolant to a pressing plate to cool the battery cell are performed.

However, pressing and cooling processes of a conventional activation process have long process time, which negatively impacts the production efficiency of battery cells, such as PPM (parts per minute), which is the number of battery cells produced per minute, or tack time, which is the process time relative to the total logistics time, and the process area required.

Korean Patent Application Publication No. 2022-0153289 discloses a conveyor system for battery activation processes, wherein the conveyor system minimizes vibration of a cell transfer tray when horizontally moving the cell transfer tray, changing the direction of the cell transfer tray (diverting the cell transfer tray), or rotating the cell transfer tray, and prevents collision of the cell transfer tray with a preceding cell transfer tray.

Korean Patent Application Publication No. 2013-0113740 discloses a coolant manifold for batteries including a box-shaped main body having an introduction space into which a coolant is introduced, the main body being provided with a distribution port communicating with the introduction space, coolant pipes of cooling plates being connected to the distribution port, one side of the introduction space being open, a cover integrally fixed to the main body, the cover being configured to shield one side of the introduction space, the cover being provided with an introduction pipe through which the coolant is introduced into the introduction space, and a connector installed in the distribution port of the main body, the coolant pipes being installed through the connector in tight contact therewith, the connector being configured to movably connect the coolant pipes and to watertightly connect the coolant pipes to the distribution port.

Japanese Utility Model Application Publication No. H6-70952 discloses a coolant manifold having an inlet and a plurality of outlets, wherein a distributing plate configured to equalize the amount of water discharged from the plurality of outlets is installed or a plate body configured to be variable according to the water pressure at the inlet is provided.

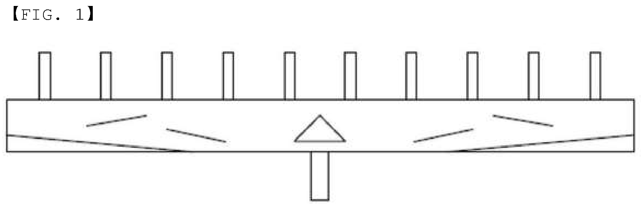

FIG. 1 shows the shape of a manifold of a conventional battery cell pressing and cooling apparatus. The manifold has a rectangular prism shape with a long overall length, a short overall width, and a thickness less than the overall width. A plurality of coolant discharge ports is formed in an upper surface of the manifold, and a coolant supply port is formed in a lower bottom surface of the manifold.

Furthermore, a fluid flow resistance body having a triangular shape, preferably an equilateral triangle, is formed in the manifold above the position at which the coolant supply port is formed, and rectangular inner plates are partially formed in an internal space of the manifold so as to be symmetrical with each other in a leftward-rightward direction of the flow resistance body.

In addition, inner plates inclined so as to be left-right symmetrical with each other in a direction toward the coolant supply port are formed at both ends of the manifold in the overall length direction.

However, it is difficult to uniformly supply a coolant to a pressing plate using the manifold of the conventional battery cell pressing and cooling apparatus.

Furthermore, the prior art documents do not disclose a manifold having a plurality of inner plates and holes capable of achieving a coolant supply differential pressure and uniform flow rate per coolant supply pipe to a pressing plate for pressing and cooling a battery cell in a battery cell pressing and cooling apparatus according to the present invention.

Therefore, there is a need for a cooling manifold for battery cell formation processes capable of uniformly supplying a coolant for battery cell cooling to a pressing plate of a battery cell pressing and cooling system capable of reducing the process time required when cooling and pressing a pouch battery cell during an activation process of the pouch battery cell and measuring the voltage of the battery cell at the same time, thereby dramatically shortening the process time, and a battery cell pressing and cooling apparatus including the same.

### (Prior Art Documents)

(Patent Document 1) Korean Patent Application Publication No. 2013-0113740
(Patent Document 2) Japanese Utility Model Application Publication No. H6-70952

### [Disclosure]

### [Technical Problem]

The present invention has been made in view of the above problems, and it is an object of the present invention to provide a cooling manifold for battery cell formation processes capable of uniformly supplying a coolant for battery cell cooling to a pressing plate of a battery cell pressing and cooling system capable of reducing the process time required when cooling and pressing a pouch battery cell during an activation process of the pouch battery cell and measuring the voltage of the battery cell at the same time, thereby dramatically shortening the process time, and a battery cell pressing and cooling apparatus including the same.

### [Technical Solution]

A cooling manifold for battery cell formation processes according to the present invention to accomplish the above object has a rectangular prism shape with a long overall length (M_{L}), a short overall width (M_{W}), and a thickness (Mt) less than the overall width, and includes a first surface (100), which is an outer surface in a thickness direction parallel to the overall length, a coolant supply port (110) in the first surface, a second surface (200) opposite the first surface in the overall length direction, a plurality of coolant discharge ports (210) in the second surface, a plurality of inner plates (300) in the rectangular prism in the overall width direction, and at least one hole (310) in each of the inner plates.

In addition, the inner plate may have a rectangular shape with a size corresponding to the overall length and the thickness of the cooling manifold, the holes may be at a constant hole pitch (H_{I}) in the overall length direction, and the hole thickness (Ht) of the at least one hole may be equal to or less than the thickness of the cooling manifold.

In addition, the length of the second surface in the overall length direction may be less than the length of the first surface in the overall length direction, and the length of the first surface in the overall length direction may be maintained up to a first position (410) of a third surface (400) in the overall width direction on both sides in the overall length direction.

In addition, the angle (α) between one end of the second surface in the overall length direction and the first position may be more than 90 degrees and less than 180 degrees.

In addition, the inner plate may be three inner plates in the overall width direction, and a first distance (I₁) between a first inner plate (320) in a direction from the first surface to the second surface and the first surface, a second distance (I₂) between the first inner plate and a second inner plate (330), and a third distance (I₃) between the second inner plate and a third inner plate (340) may be equal to each other.

In addition, a fourth distance (I₄) between the third inner plate and the second surface may be less than each of the first distance, the second distance, and the third distance.

In addition, the first position may be between the second inner plate and the third inner plate.

In addition, the size of a first hole (311) in the first inner plate and the size of a second hole (312) in the second inner plate may be less than the size of a third hole (313) in the third inner plate and may be equal to or less than the size of each of the coolant discharge ports.

A battery cell pressing and cooling apparatus according to the present invention to accomplish the above object includes a plurality of pressing plates spaced apart from each other so as to provide spaces in which pouch-shaped battery cells are positioned and a cooling manifold for battery cell formation processes configured to individually supply a coolant to the pressing plates.

In addition, the battery cell pressing and cooling apparatus may include a battery cell pressing portion configured to press the battery cells in the state in which the battery cells are between the pressing plates and a plurality of battery cell support portions configured to individually support the plurality of battery cells between the pressing plates such that the height of the plurality of battery cells is uniformly maintained between the pressing plates and to move together with the battery cells in a pressing direction when the battery cells are pressed by the pressing plates, wherein a cooling channel may be in the pressing plate, a pressing plate inlet on one side of the pressing plate may be connected to the coolant discharge port, and a pressing plate outlet on an other side of the pressing plate may be configured to discharge the coolant that passes through the cooling channel.

In addition, the battery cell support portion may include a base frame under the pressing plate and a battery cell support frame coupled to the base frame so as to be movable upward from the base frame and to be movable downward toward the base frame, and the battery cells may be supported at a constant height by the battery cell support frame.

In addition, an electrode contact unit configured to measure the voltage of the battery cell when the pressing plate presses and cools the battery cell may be at each of both ends of the pressing plate in a longitudinal direction.

The present invention may provide various combinations of the above solving means.

### [Advantageous Effects]

As is apparent from the above description, a cooling manifold for battery cell formation processes according to the present invention has the effect of reducing the supply differential pressure of a coolant and equalizing the flow distributions of the coolant supplied to pressing plates.

In addition, the cooling manifold for battery cell formation processes has the effect of dramatically reducing the time required for an activation process of a plurality of battery cells, thereby improving PPM (parts per minute).

In addition, the cooling manifold for battery cell formation processes has the effect of having an improved structure capable of uniformly supplying the coolant to the pressing plate that presses the battery cell, thereby reducing the process time and process area required for a battery cell to be pressed and cooled.

In addition, the cooling manifold for battery cell formation processes has the effect that the battery cell is uniformly pressed between the pressing plates while being simultaneously cooled, whereby it is possible to manufacture battery cells with consistent quality during the activation processes, etc.

In addition, the cooling manifold for battery cell formation processes has the effect that the voltage of the battery cell is measured simultaneously with pressing and cooling of the battery cell, whereby it is possible to monitor the state of the battery cell during the process.

### [Description of Drawings]

FIG. 1 is a sectional view of a conventional cooling manifold for battery cell formation processes.
FIG. 2 is a sectional view of a cooling manifold for battery cell formation processes according to a first embodiment of the present invention.
FIG. 3 is a sectional view of a cooling manifold for battery cell formation processes according to a second embodiment of the present invention.
FIG. 4 is a sectional view showing the spacing of inner plates of the cooling manifold for battery cell formation processes according to the second embodiment of the present invention.
FIG. 5 is a sectional view showing a hole formed in the inner plate of the cooling manifold for battery cell formation processes according to the second embodiment of the present invention.
FIG. 6 is a perspective view of the cooling manifold for battery cell formation processes according to the second embodiment of the present invention.
FIG. 7 is a view showing connection between the cooling manifold for battery cell formation processes and a pressing plate of a battery cell pressing and cooling system according to an embodiment of the present invention.
FIG. 8 is a perspective view of a cooling unit of the battery cell pressing and cooling system according to the embodiment of the present invention.
FIG. 9 is a plan view of an electrode contact unit of the cooling unit of the battery cell pressing and cooling system according to the embodiment of the present invention.
FIG. 10 is a perspective view showing a joint between an electrode lead and the electrode contact unit of the cooling unit of the battery cell pressing and cooling system according to the embodiment of the present invention.
FIG. 11 is a CFD flow velocity profile diagram of the conventional cooling manifold for battery cell formation processes.
FIG. 12 is a CFD differential pressure profile diagram of the cooling manifold for battery cell formation processes according to the present invention.
FIG. 13 is a table showing the differential pressure and the flow distribution standard deviation at a coolant discharge port in the conventional cooling manifold for battery cell formation processes and the manifold according to the present invention for comparison.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery cell pressing and cooling system according to the present invention and a method of controlling the same will be described with reference to the accompanying drawings.

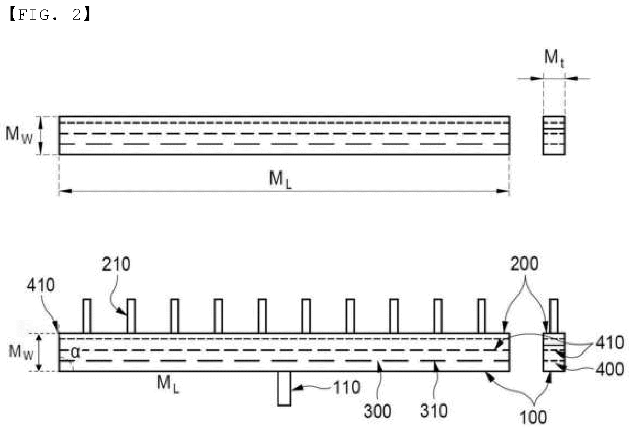

FIG. 2 is a sectional view of a cooling manifold for battery cell formation processes according to a first embodiment of the present invention.

The cooling manifold for battery cell formation processes has a rectangular prism shape with a long overall length M_{L}, a short overall width M_{W}, and a thickness Mt less than the overall width, and includes a first surface 100, which is an outer surface in the thickness direction parallel to the overall length, a coolant supply port 110 formed in the first surface 100, a second surface 200 opposite the first surface in the overall length direction, a plurality of coolant discharge ports 210 formed in the second surface, a plurality of inner plates 300 formed in the rectangular prism in the overall width direction, and at least one hole 310 formed in each of the inner plates.

The overall length of the manifold is the longest, followed by the overall width, and the thickness is the thinnest.

The coolant supply port formed in the first surface may be formed in the surface in the overall width direction and is preferably formed between first inner plates at the lowermost corner in the overall width direction.

The coolant supply port may be provided in one or more, and may be formed in the first surface, or between the first inner plates and the lowermost corner in the overall width direction. As long as the flow rate of a coolant that is introduced is constant, the number of the coolant supply ports may increase and the diameter of the coolant supply ports may decrease.

The coolant discharge port is connected to a pressing plate of a battery cell pressing and cooling apparatus. The number of the coolant discharge ports is equal to the number of the pressing plates.

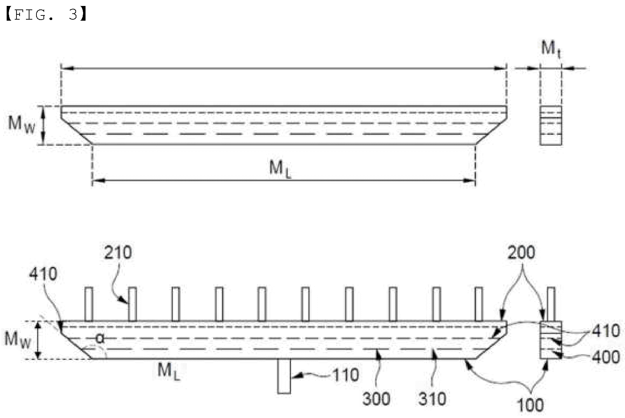

FIG. 3 is a sectional view of a cooling manifold for battery cell formation processes according to a second embodiment of the present invention.

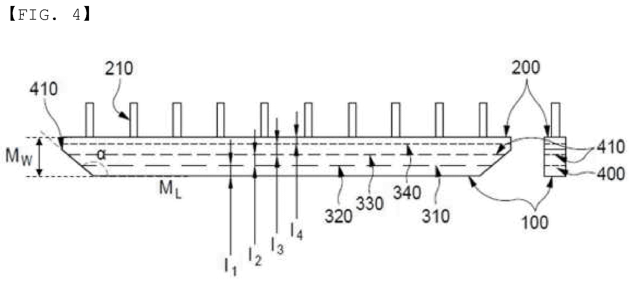

FIG. 4 is a sectional view showing the spacing of inner plates of the cooling manifold for battery cell formation processes according to the second embodiment of the present invention.

The inner plate has a rectangular shape with a size corresponding to the overall length and the thickness of the cooling manifold, and the holes are formed at a constant hole pitch H_{I} in the overall length direction, wherein the hole thickness Hₜ of the hole may be equal to or less than the thickness of the cooling manifold.

The corner of the inner plate in the overall length direction may be in contact with the inner surface of the manifold. At the part where the inner plate and the inner surface of the manifold are in contact with each other, the coolant may pass only through the holes.

The section of the inner plate in the overall length direction may have an linear or concave-convex shape. The concave-convex shape may be a corrugated shape, or the section of the convave-convex shape in the overall length direction may be formed with alternating concave and convex portions in a rectangular or square shape.

The hole formed in the inner plate may be formed in various shapes. The hole may have any one of a polygonal shape, a quadrangular shape, a triangular shape, and a circular shape. Preferably, the hole may have a quadrangular shape, or the hole may extend to the inner surface of the manifold in a rectangular shape, thereby discontinuing the inner plate at regular intervals, as shown in (a) of FIG. 4.

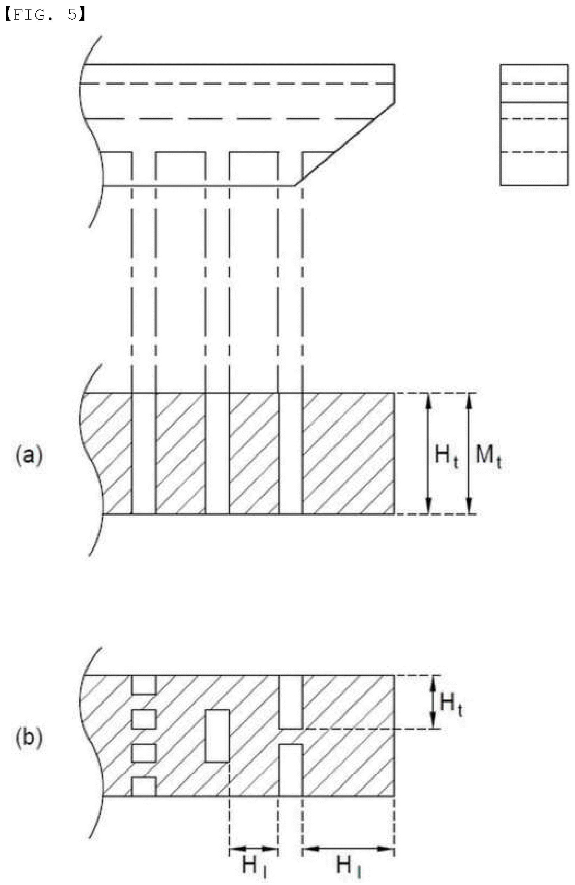

The hole may be partially formed through the inner plate, as shown in (b) of FIG. 5.

FIG. 5 is a sectional view showing the hole formed in the inner plate of the cooling manifold for battery cell formation processes according to the second embodiment of the present invention.

The length of the second surface in the overall length direction may be less than the length of the first surface in the overall length direction, and the length of the first surface in the overall length direction may be maintained up to a first position 410 of a third surface 400 in the overall width direction on both sides in the overall length direction.

The length of the manifold in the overall length direction may be gradually decreased from the first surface to the second surface. The length in the overall length direction may be uniform from the first position to the second surface. Therefore, both sides of the manifold in the overall length direction may be gradually narrow from the second surface to the first surface. This may eliminate the phenomenon of a coolant supplied through the coolant supply port being stagnant at both sides of the manifold in the overall length direction.

In addition, a radial guide vane (not shown) may be formed at the point of the first surface where the coolant supply port is formed. A plurality of radial guide vanes may be formed about the central axis of the coolant supply port in a circular pattern, whereby a fluid introduced into the interior of the manifold may be rapidly moved in the overall length direction. The length of the guide vane may be relatively short in the thickness direction and relatively long in the overall length direction.

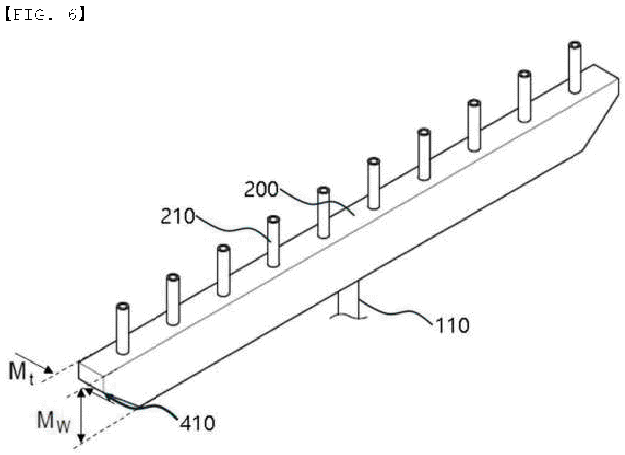

FIG. 6 is a perspective view of the cooling manifold for battery cell formation processes according to the second embodiment of the present invention.

The angle α formed between one end of the second surface in the overall length direction and the first position may be 90 degrees to less than 180 degrees. The angle may preferably be 120 degrees to 150 degrees. Deviating from the angle may cause stagnation in the flow of the coolant in the manifold.

The inner plate is provided in three in the overall width direction, and a first distance I₁ between a first inner plate 320 formed in a direction from the first surface to the second surface and the first surface, a second distance I₂ between the first inner plate and a second inner plate 330, and a third distance I₃ between the second inner plate and a third inner plate 340 may be equal to each other.

If the first to third distances are not equal to each other, the flow of the fluid in the manifold may stall, causing an uneven flow distribution of the coolant discharged through the coolant discharge port.

A fourth distance I₄ between the third inner plate and the second surface may be less than each of the first distance, the second distance, and the third distance.

If the fourth distance is greater than each of the first distance, the second distance, and the third distance, the coolant may not be discharged uniformly through the coolant discharge port.

The first position may be between the second inner plate and the third inner plate. If the first position is not located between the second inner plate and the third inner plate, the stagnation of the coolant supplied through the coolant supply port in the manifold may increase.

The size of a first hole 311 formed in the first inner plate and the size of a second hole 312 formed in the second inner plate may be less than the size of a third hole 313 formed in the third inner plate and may be equal to or less than the size of the coolant discharge port.

The number of the first holes is greater than the number of the second holes, and the number of the second holes is greater than the number of the third holes. The total area of the first holes may be equal to the total area of the second holes, and the total area of the second holes may be equal to the total area of the third holes.

Radial guide vanes (not shown) may be formed about the hole formed in the inner plate. The section of the hole formed in the inner plate may be parallel to the inner plate or may be upwardly bent in the direction from the first surface to the second surface.

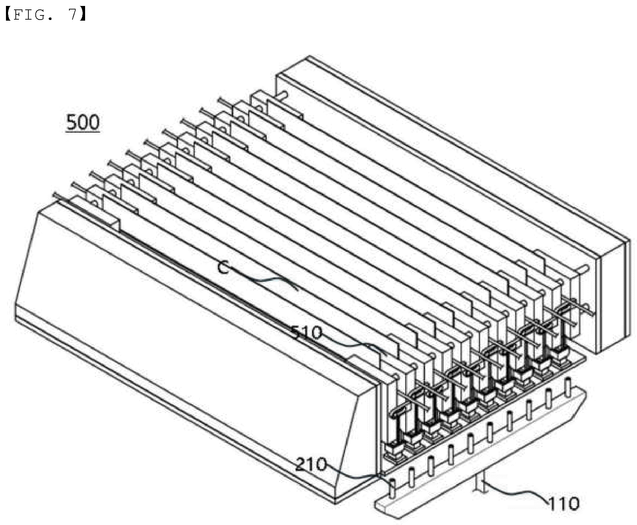

FIG. 7 is a view showing connection between the cooling manifold for battery cell formation processes and a pressing plate of a battery cell pressing and cooling system according to an embodiment of the present invention.

The battery cell, preferably a pouch-shaped battery cell, includes a gas pocket portion and a battery portion having an electrode assembly received therein.

A battery cell pressing and cooling apparatus may include a plurality of pressing plates disposed spaced apart from each other so as to provide spaces in which pouch-shaped battery cells are disposed and a cooling manifold for battery cell formation processes configured to individually supply a coolant to the pressing plates.

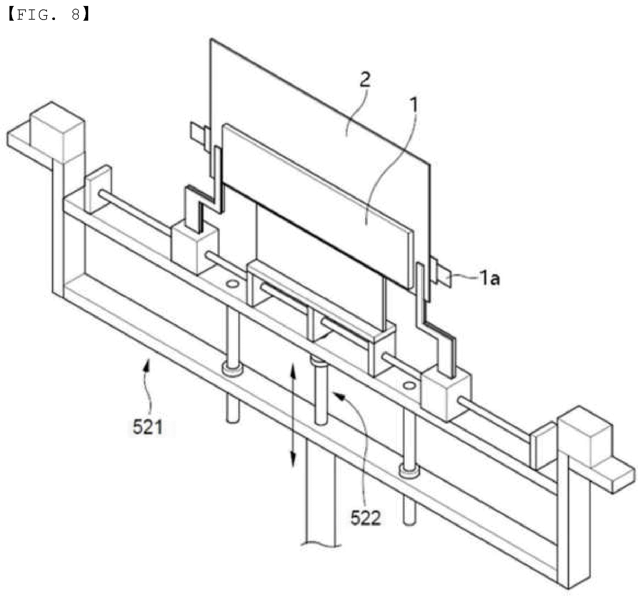

FIG. 8 is a perspective view of a cooling unit of the battery cell pressing and cooling system according to the embodiment of the present invention.

The cooling unit may include a plurality of pressing plates 510 disposed so as to face rectangular planes of the plurality of battery cells, the pressing plates being configured to press the battery cells, and a plurality of battery cell support portions 520 configured to move together with the battery cells in a pressing direction when the pressing plates press the battery cells, wherein the battery cell support portion may include a base frame 521 located under the pressing plate and a battery cell support frame 522 configured to move the battery cell upward and downward from the base frame in the up-and-down (z-axis) direction, and a coolant flow path (not shown) may be formed in the pressing plate.

The pressing plate may have a rectangular shape. The pressing plate is not limited in shape as long as it is possible to uniformly press and cool the battery cell. The pressing plate is rectangular in shape so as to correspond to the rectangular shape of the battery cell, and the surface of the pressing plate 510 facing the battery cell may be flat or rounded so as to correspond to a swelling portion of the battery cell.

A plurality of pressing plates is provided to press both side surfaces of the battery cell. Since the pressing plate has a plate shape in which both surfaces thereof are flat, the battery cell may be pressed by both surfaces of the pressing plate. The pressing plate is configured to be movable in the horizontal direction (x-axis direction: pressing direction). The battery cell is inserted between the pressing plates, and the pressing plates may press the battery cell while moving in the horizontal direction. In order to stably press the battery cell, it is preferable for the area of the pressing plate to be greater than at least the area of the battery portion in which the electrode assembly of the battery cell is received.

The battery cell support frame may move upward and downward between a first height, which is the height of the battery cell support frame when the battery cell is pressed by the pressing plates, and a second height, which is the height of the battery cell support frame when receiving the battery cell from the gripper unit.

A lifting shaft housing is coupled to a lower surface of the base frame, a lifting shaft movable upward and downward through the base frame from the lifting shaft housing is coupled to the battery cell support frame, and the battery cell support frame may be moved upward and downward by upward and downward movement of the lifting shaft. The battery cell support frame and the base frame may be connected to each other via a first guide shaft configured to guide upward and downward movement of the battery cell support frame. A battery cell detection sensor configured to detect the presence or absence of the battery cell may be installed on the battery cell support frame.

Guide rails extending in the pressing direction may be installed on both sides of the pressing plate, and when the battery cell is pressed by the pressing plate, the base frame may move along the guide rails in the pressing direction, whereby the plurality of battery cell support portions may be moved in the pressing direction.

A coolant flow path configured to cool the battery cell may be provided in the pressing plate. A temperature sensor configured to measure the temperature of the pressing plate may be installed at the pressing plate.

In addition, the battery cell pressing and cooling apparatus may include a battery cell pressing portion configured to press battery cells in the state in which the battery cells are interposed between the pressing plates and a plurality of battery cell support portions configured to individually support the plurality of battery cells between the pressing plates such that the height of the plurality of battery cells is uniformly maintained between the pressing plates and to move together with the battery cells in the pressing direction when the battery cells are pressed by the pressing plates, wherein a cooling channel may be formed in the pressing plate, a pressing plate inlet formed on one side of the pressing plate may be connected to the coolant discharge port, and the coolant that has passed through the cooling channel may be discharged through a pressing plate outlet formed on the other side of the pressing plate.

In addition, the battery cell support portion may include a base frame located under the pressing plate and a battery cell support frame coupled to the base frame so as to be movable upward from the base frame and to be movable downward toward the base frame, wherein the battery cells may be supported at a constant height by the battery cell support frame.

In addition, an electrode contact unit configured to measure the voltage of the battery cell when the pressing plate presses and cools the battery cell may be formed at each of both ends of the pressing plate in the longitudinal direction.

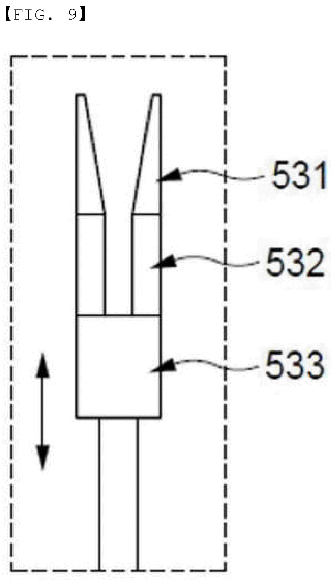

FIG. 9 is a plan view of an electrode contact unit of the cooling unit of the battery cell pressing and cooling system according to the embodiment of the present invention.

An electrode contact unit 530 configured to measure the voltage of the battery cell when the pressing plate presses and cools the battery cell may be formed at each of both ends of the pressing plate in the longitudinal direction.

The electrode contact unit may be fixedly formed at a predetermined position on each of both sides of the pressing plate.

The electrode contact unit, which is fixedly attached to one surface of the pressing plate, may include a "^"-shaped lead insertion portion 531 configured to allow a lead of the battery cell to be inserted thereinto, a voltage sensing terminal located on an inner surface of the lead insertion portion in contact with the lead, and a driving portion configured to move the lead insertion portion forward and backward in a direction in which the lead is located, wherein, when the battery cell is located at a position at which the battery cell is pressed by the pressing plate, the driving portion may move the lead insertion portion in the direction toward the lead such that the lead is in contact with the voltage sensing terminal.

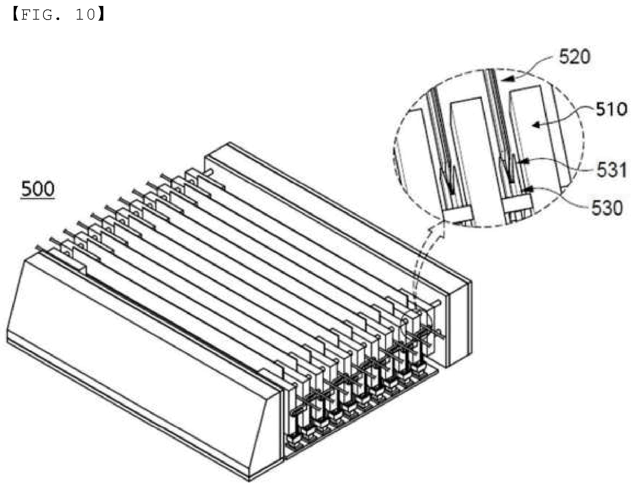

FIG. 10 is a perspective view showing a joint between the electrode lead and the electrode contact unit of the cooling unit of the battery cell pressing and cooling system according to the embodiment of the present invention.

The lead insertion portion is formed with a flared front end, and therefore the lead insertion portion may guide a thin lead toward the voltage sensing terminal even if the lead is bent in a specific direction.

During pressing and cooling, a profile of the voltage value of the battery cell may be collected from the electrode lead in contact with the voltage sensing terminal and may be transmitted to the controller.

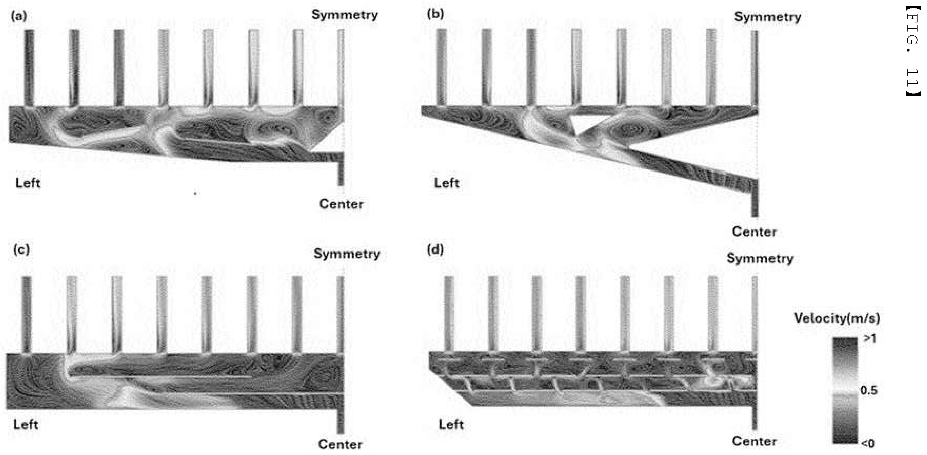

FIG. 11 is a CFD flow velocity profile diagram of the conventional cooling manifold for battery cell formation processes.

FIG. 11 shows simulation of the flow velocity (m/sec) for the conventional manifold and the manifold according to the present invention, wherein (a) shows the conventional manifold with no internal resistance body inside, (b) shows the conventional manifold with a triangular resistance body inside, (c) shows the conventional manifold with a plate-shaped resistance body inside, and (d) shows the manifold according to the present invention.

Comparing the velocity distributions, it can be seen that the fluid that has passed through the coolant supply port of the present invention (d) rapidly becomes uniform in flow velocity while passing through the first inner plate.

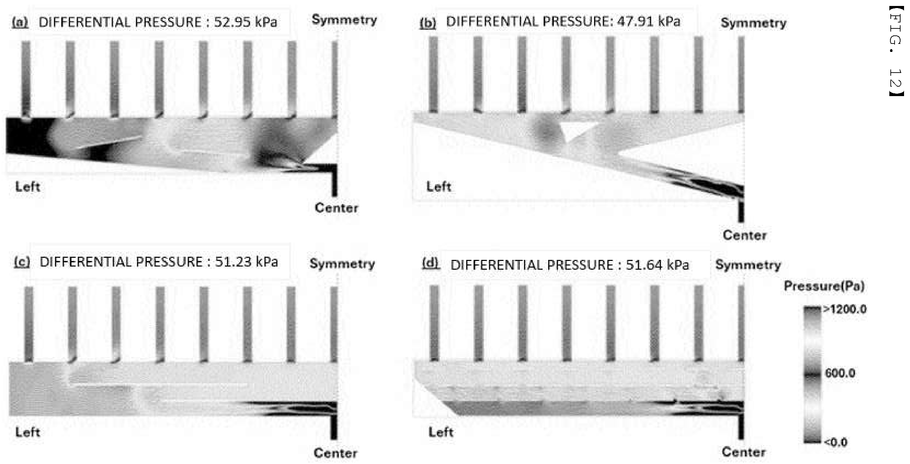

FIG. 12 is a CFD differential pressure profile diagram of the cooling manifold for battery cell formation processes according to the present invention.

FIG. 12 shows simulation of the differential pressure (Pa) for the conventional manifold and the manifold according to the present invention, wherein (a) shows the conventional manifold with no internal resistance body inside, (b) shows the conventional manifold with a triangular resistance body inside, (c) shows the conventional manifold with a plate-shaped resistance body inside, and (d) shows the manifold according to the present invention.

Comparing the differential pressure distributions, it can be seen that the differential pressure of the fluid that has passed through the coolant supply port of the present invention (d) is gradually stabilized while the fluid passes through the first inner plate and the differential pressure of the fluid becomes uniform while the fluid passes through the second inner plate.

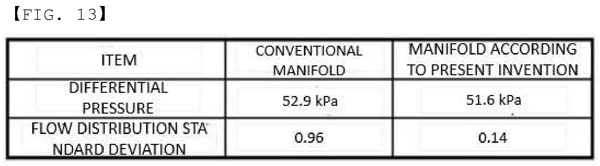

FIG. 13 is a table showing the differential pressure and the flow distribution standard deviation at a coolant discharge port in the conventional cooling manifold for battery cell formation processes and the manifold according to the present invention for comparison.

In the conventional manifold, the pressure difference is 52.9 kPa, and the flow distribution standard deviation in pressing plate pipes connected to a total of 15 coolant discharge ports is 0.96.

In the manifold according to the present invention, the pressure difference is 51.6 kPa, and the flow distribution standard deviation in pressing plate pipes connected to a total of 15 coolant discharge ports is 0.14. Therefore, applying the manifold according to the present invention enables more precise control of battery cell cooling efficiency in the battery cell pressing and cooling apparatus.

Those skilled in the art to which the present invention pertains will appreciate that various applications and modifications are possible within the category of the present invention based on the above description.

### (Description of Reference Symbols)

- 1:: Battery portion
- 1a:: Lead
- 2:: Gas pocket portion
- 100:: First surface
- 110:: Coolant supply port
- 200:: Second surface
- 210:: Coolant discharge port
- 300:: Inner plate
- 310:: Hole
- 311:: First hole
- 312:: Second hole
- 313:: Third hole
- 320:: First inner plate
- 330:: Second inner plate
- 340:: Third inner plate
- 400:: Third surface
- 410:: First position
- 500:: Cooling unit
- 510:: Pressing plate
- 520:: Battery cell support portion
- 521:: Base frame
- 522:: Battery cell support frame
- 530:: Electrode contact unit
- C:: Battery cell

## Claims

1. A cooling manifold for battery cell formation processes, wherein
the cooling manifold has a rectangular prism shape with a long overall length, a short overall width, and a thickness less than the overall width, and
the cooling manifold comprises:
a first surface, which is an outer surface in a thickness direction parallel to the overall length;
a coolant supply port in the first surface;
a second surface opposite the first surface in the overall length direction;
a plurality of coolant discharge ports in the second surface;
a plurality of inner plates in the rectangular prism in the overall width direction; and
at least one hole in each of the inner plates.

2. The cooling manifold according to claim 1, wherein
the inner plate has a rectangular shape with a size corresponding to the overall length and the thickness of the cooling manifold,
the holes are at a constant hole pitch in the overall length direction, and
a hole thickness of the at least one hole is equal to or less than the thickness of the cooling manifold.

3. The cooling manifold according to claim 1, wherein
a length of the second surface in the overall length direction is less than the length of the first surface in the overall length direction, and
the length of the first surface in the overall length direction is maintained up to a first position of a third surface in the overall width direction on both sides in the overall length direction.

4. The cooling manifold according to claim 3, wherein an angle between one end of the second surface in the overall length direction and the first position is more than 90 degrees and less than 180 degrees.

5. The cooling manifold according to claim 4, wherein
the inner plate is three inner plates in the overall width direction, and
a first distance between a first inner plate in a direction from the first surface to the second surface and the first surface, a second distance between the first inner plate and a second inner plate, and a third distance between the second inner plate and a third inner plate are equal to each other.

6. The cooling manifold according to claim 5, wherein a fourth distance between the third inner plate and the second surface is less than each of the first distance, the second distance, and the third distance.

7. The cooling manifold according to claim 5, wherein the first position is between the second inner plate and the third inner plate.

8. The cooling manifold according to claim 5, wherein a size of a first hole in the first inner plate and a size of a second hole in the second inner plate are less than a size of a third hole in the third inner plate and is equal to or less than a size of each of the coolant discharge ports.

9. A battery cell pressing and cooling apparatus comprising the cooling manifold according to any one of claims 1 to 8, the battery cell pressing and cooling apparatus comprising:
a plurality of pressing plates spaced apart from each other so as to provide spaces in which pouch-shaped battery cells are positioned; and
a cooling manifold for battery cell formation processes configured to individually supply a coolant to the pressing plates.

10. The battery cell pressing and cooling apparatus according to claim 9, comprising:
a battery cell pressing portion configured to press the battery cells in a state in which the battery cells are between the pressing plates; and
a plurality of battery cell support portions configured to individually support the plurality of battery cells between the pressing plates such that a height of the plurality of battery cells is uniformly maintained between the pressing plates and to move together with the battery cells in a pressing direction when the battery cells are pressed by the pressing plates, wherein
a cooling channel is in the pressing plate,
a pressing plate inlet on one side of the pressing plate is connected to the coolant discharge port, and
a pressing plate outlet on an other side of the pressing plate is configured to discharge the coolant that passes through the cooling channel.

11. The battery cell pressing and cooling apparatus according to claim 10, wherein
the battery cell support portion comprises:
a base frame under the pressing plate; and
a battery cell support frame coupled to the base frame so as to be movable upward from the base frame and to be movable downward toward the base frame, and
the battery cells are supported at a constant height by the battery cell support frame.

12. The battery cell pressing and cooling apparatus according to claim 11, wherein an electrode contact unit configured to measure a voltage of the battery cell when the pressing plate presses and cools the battery cell is at each of both ends of the pressing plate in a longitudinal direction.
